# EUROPEAN PATENT APPLICATION

(11) **EP 4 800 651 A1**
(43) Date of publication of application: **02.09.2026**
(21) Application number: 24913316.6
(22) Date of filing: 18.10.2024
(51) Int. Cl.: G06T 11/00, G06N 3/0475, G06F 16/58, G06F 3/04895, G06F 40/279

(54) **METHOD FOR GENERATING IMAGE ON BASIS OF PLURALITY OF IMAGES, AND ELECTRONIC DEVICE THEREFOR**

(30) Priority: 26.12.2023 KR 20230191769; 05.03.2024 KR 20240031332
(71) Applicant: Samsung Electronics Co., Ltd., Suwon-si, Gyeonggi-do 16677 (KR)
(72) Inventor: YANG, Chulju, Suwon-si, Gyeonggi-do 16677 (KR); KIM, Moonsoo, Suwon-si, Gyeonggi-do 16677 (KR); NAM, Sungguk, Suwon-si, Gyeonggi-do 16677 (KR); MUN, Jihun, Suwon-si, Gyeonggi-do 16677 (KR); YOO, Nagyeom, Suwon-si, Gyeonggi-do 16677 (KR); LEE, Heekuk, Suwon-si, Gyeonggi-do 16677 (KR)
(74) Representative: Appleyard Lees IP LLP
(86) International application number: PCT/KR2024/015851
(87) International publication number: WO 2025/143476

(57) **Abstract**

In an embodiment of the present disclosure, an electronic device may comprise: a memory; and at least one processor electrically connected to the memory, wherein the memory stores instructions. The instructions, when executed by the at least one processor, may cause the electronic device to: acquire a plurality of images, wherein each of the plurality of images includes metadata including information about an element of interest; generate at least one prompt for image generation by using an artificial intelligence model on the basis of the plurality of images and elements of interest of the plurality of images; and generate at least one image by using a generative artificial intelligence model on the basis of the at least one generated prompt.

## Description

### TECHNICAL FIELD

Embodiment disclosed in the disclosure are related to a method for generating an image based on a plurality of images and an electronic device therefor.

### BACKGROUND

Generative artificial intelligence (generative AI) is a type of artificial intelligence (AI) system capable of generating text, images, and other media in response to prompts. Generative AI learns the patterns and structures of input training data and subsequently creates new data with similar characteristics. In particular, image generative AI utilizes algorithms such as image classification and object recognition to generate images for various works.

Meanwhile, when synthesizing images or creating new ones based on multiple images, it is possible to utilize images of the same subject captured by multiple devices, as well as information regarding object details, depth, composition, and shooting location included in the image metadata.

The aforementioned information may be provided as related art for the purpose of facilitating an understanding of the disclosure. None of the above contents shall be construed as a claim or determination as to whether they can be applied as prior art in relation to the disclosure.

### DISCLOSURE

### TECHNICAL SOLUTION

An electronic device according to an embodiment of the disclosure may comprise memory and at least one processor electrically connected to the memory, and the memory may store instructions. The instructions according to an embodiment of the disclosure, when executed by the at least one processor, cause the electronic device to acquire a plurality of images, each of the plurality of images including metadata including information corresponding to an interest factor, generate at least one prompt for generating images using an artificial intelligence model, based on the plurality of images and interest factors of the plurality of images, and generate, based on the generated at least one prompt, at least one image using the artificial intelligence model.

A method of the electronic device according to an embodiment of the disclosure may comprise: acquiring a plurality of images, and each of the plurality of images including metadata including information corresponding to an interest factor, generating at least one prompt for generating images using an artificial intelligence model, based on the plurality of images and the interest factors of the plurality of images, and generating, based on the generated at least one prompt, at least one image using the artificial intelligence model.

In a computer-readable storage medium comprising instructions according to an embodiment of the disclosure, the instructions, when executed by at least one processor, cause the at least one processor to acquire a plurality of images, each of the plurality of images including metadata including information corresponding to an interest factor, generate at least one prompt for generating images using an artificial intelligence model, based on the plurality of images and interest factors of the plurality of images, and generate, based on the generated at least one prompt, at least one image using the artificial intelligence model.

### BRIEF DESCRIPTION OF THE DRAWINGS

FIG. 1 is a configuration diagram of a system for generating an AI image using a plurality of images, according to an embodiment of the disclosure.
FIG. 2 is a block diagram illustrating a configuration of an electronic device, according to an embodiment of the disclosure.
FIG. 3 is a block diagram of modules of an electronic device, according to an embodiment of the disclosure.
FIG. 4 is a schematic flowchart of operations of an electronic device acquiring an AI-generated image, according to an embodiment of the disclosure.
FIG. 5 is a flowchart of operations of an electronic device generating an AI image and transmitting the same to an external electronic device, according to an embodiment of the disclosure.
FIG. 6A is an exemplary view illustrating an electronic device receiving an image from an external electronic device, according to an embodiment of the disclosure.
FIG. 6B is an exemplary view of a user interface (UI) for a process in which an electronic device generates an AI image using a received image, according to an embodiment of the disclosure.
FIG. 6C is an exemplary view of a generated AI image, according to an embodiment of the disclosure.
FIGS. 7A and 7B are exemplary views illustrating an electronic device generating a plurality of AI images, according to an embodiment of the disclosure.
FIGS. 8A and 8B are exemplary views illustrating an electronic device generating a plurality of AI images, according to an embodiment of the disclosure.
FIGS. 9A and 9B are exemplary views illustrating an electronic device generating an AI image, according to an embodiment of the disclosure.
FIG. 10 is an exemplary view illustrating an electronic device generating an AI image, according to an embodiment of the disclosure.
FIGS. 11A, 11B, and 11C are exemplary views illustrating AI image generation when a priority is not specified, according to an embodiment of the disclosure.
FIG. 12 is a block diagram illustrating an electronic device in a network environment according to various embodiments.

In connection with the description of the drawings, the same or similar reference numerals may be used for the same or similar components.

### DETAILED DESCRIPTION

Hereinafter, various embodiments of the disclosure will be described with reference to the accompanying drawings. However, this is not intended to limit the disclosure to specific embodiments, and it should be understood to include various modifications, equivalents, and/or alternatives of the embodiments of the disclosure.

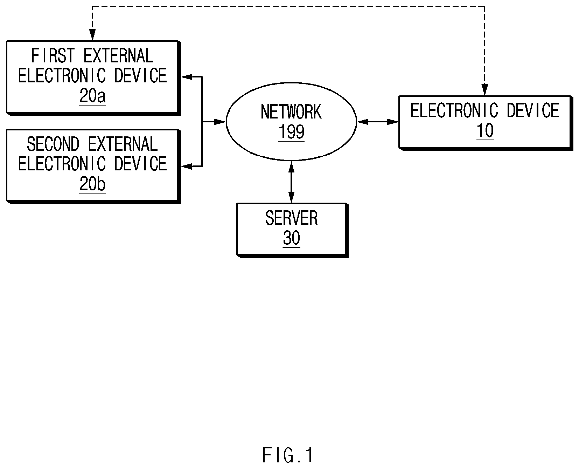

FIG. 1 is a configuration diagram of a system for generating an AI image using a plurality of images, according to an embodiment of the disclosure.

Referring to FIG. 1, in an embodiment of the disclosure, a system for generating an AI image using a plurality of images may include at least one of an electronic device 10, at least one external electronic device (e.g., a first external electronic device 20a, a second external electronic device 20b), a server 30, or a network 199. For example, the network 199 may include at least one of a 3rd Generation Partnership Project (3GPP) network, a Long Term Evolution (LTE) network, a 5G network, a World Interoperability for Microwave Access (WIMAX) network, the Internet, a local area network (LAN), a wireless local area network (Wireless LAN), a wide area network (WAN), a personal area network (PAN), a Wi-Fi network, a Bluetooth network, a satellite broadcasting network, an analog broadcasting network, or a digital multimedia broadcasting (DMB) network, but is not limited thereto.

The system of FIG. 1 may include at least one external electronic device (e.g., a first external electronic device 20a and/or a second external electronic device 20b) for transmitting at least one image to the electronic device 10. The at least one external electronic device (e.g., the first external electronic device 20a and/or the second external electronic device 20b) may communicate with the server 30 and/or the electronic device 10 through the network 199 or via a direct connection. For example, the electronic device 10 and/or the at least one external electronic device (e.g., the first external electronic device 20a and/or the second external electronic device 20b) may include any electronic device such as a smartphone, a laptop, a desktop, a TV, a smart pad, a tablet PC, a wearable device (e.g., a head-mounted device such as smart glasses or a head-mounted-device (HMD), electronic clothes, an electronic bracelet, an electronic necklace, an electronic appcessory, an electronic tattoo, a smart mirror, or a smart watch), a connected car, a video see through (VST) device, an extended reality (XR) device, or a portable terminal.

Hereinafter, those skilled in the art will understand that descriptions related to the first external electronic device 20a may be similarly applied to the second external electronic device 20b. The number of the at least one external electronic device (e.g., the first external electronic device 20a and/or the second external electronic device 20b) illustrated in FIG. 1 is merely an example, and embodiments of the disclosure are not limited thereto.

In an embodiment of the disclosure, the electronic device 10 may receive an image from the first external electronic device 20a. In an example, the electronic device 10 may receive an image from the first external electronic device 20a through the network 199. The electronic device 10 may receive an image stored in the first external electronic device 20a from the server 30. For example, the server 30 may include a server supporting a social network service (SNS) and/or a web server.

In an example, the first external electronic device 20a may transmit an image to the server 30. The electronic device 10 may receive the image transmitted by the first external electronic device 20a from the server 30. The electronic device 10 may transmit a generated AI image to the first external electronic device 20a using the received image. In other words, the electronic device 10 and the first external electronic device 20a may transmit and receive an image (e.g., an image stored in the first external electronic device 20a, an AI image generated by the electronic device 10) through the server 30. For example, the electronic device 10 and the first external electronic device 20a may transmit and receive an image through an SNS chat room.

In an embodiment of the disclosure, the first external electronic device 20a may transmit an image including information. For example, the information may include any metadata related to the image. For example, the metadata may include information on at least one of a date (e.g., a date on which the image was captured), a time (e.g., a time at which the image was captured), or a location (e.g., a location at which the image was captured). For example, the metadata may include information on shooting conditions (e.g., a shooting device, a shooting resolution, a shooting location, a shooting composition, and/or a point of view). For example, the metadata may include information on a user's interest factor and/or a priority of the interest factor. For example, the interest factor may include a certain area and/or an element (e.g., an object (e.g., a person or a building), weather, nature, scenery, or a background) on the image designated by the user.

In an embodiment of the disclosure, the electronic device 10 may generate a prompt for image generation. For example, the prompt may include at least one of image information and/or text information. In an example, the electronic device 10 may generate the prompt based on a user's interest factor and/or a priority of the interest factor. For example, when the user's interest factor is a specific person on an image, the electronic device 10 may generate the prompt for generating an image including the specific person. For example, when priorities are specified among a plurality of interest factors from at least one image, the electronic device 10 may generate the prompt for generating an image in consideration of the priorities. For example, when a plurality of persons are designated as interest factors and priorities are determined among the plurality of persons, the electronic device 10 may generate the prompt such that a person having the highest priority is located at the center of a generated image.

In an embodiment of the disclosure, the electronic device 10 may generate a plurality of prompts using a plurality of images. For example, the electronic device 10 may generate a plurality of prompts respectively corresponding to the plurality of images, based on an interest factor and/or a priority of the interest factor of each of the plurality of images. For example, the electronic device 10 may generate a personalized prompt based on an interest factor and/or a priority of the interest factor of each of a plurality of users.

In an embodiment of the disclosure, when a user does not designate an interest factor and/or a priority of the interest factor, the electronic device 10 may determine the interest factor and/or the priority of the interest factor from at least one image using an artificial intelligence model. The electronic device 10 may generate a prompt based on the determined interest factor and/or the priority of the interest factor.

In an embodiment of the disclosure, the electronic device 10 may generate an image. In an example, the electronic device 10 may generate the image using a generative artificial intelligence model. For example, the electronic device 10 may generate the image using a diffusion model and/or generative adversarial networks (GAN). In the disclosure, an AI image may correspond to a term referring to an image generated (e.g., obtained) by the electronic device 10 using an image generative artificial intelligence model.

In an embodiment of the disclosure, the electronic device 10 may generate at least one image using a generative artificial intelligence model from at least one generated prompt. In an example, the electronic device 10 may generate a plurality of images using a plurality of prompts after generating the plurality of prompts from a plurality of images. For example, the electronic device 10 may generate a personalized image for each of a plurality of users using a personalized prompt for each of the plurality of users.

In an embodiment of the disclosure, the electronic device 10 may transmit an image generated using a generative artificial intelligence model to at least one external electronic device (e.g., the first external electronic device 20a, the second external electronic device 20b) and/or the server 30. In an example, the electronic device 10 may transmit the generated image to a shooting device (e.g., the first external electronic device 20a) based on information of the shooting device (e.g., identification information) included in information (e.g., metadata) of the generated image. For example, the electronic device 10 may identify the shooting device using the information of the shooting device. The electronic device 10 may transmit the generated image by communicating with the identified shooting device through the network 199. For example, the electronic device 10 may transmit at least one or more personalized images to an external electronic device corresponding to each of at least one or more users.

The configuration of the system for generating an image using AI described above with reference to FIG. 1 is merely an example, and embodiments of the disclosure are not limited thereto. For example, the electronic device 10 may obtain an image from a separate external server, other than at least one external electronic device (e.g., the first external electronic device 20a or the second external electronic device 20b), to generate an AI image. The external server may include the server 30 and may include a server having any database capable of obtaining image information corresponding to a specific image. For example, the network 199 may include a plurality of networks. A network between the electronic device 10 and the server 30 and a network between at least one external electronic device (e.g., the first external electronic device 20a or the second external electronic device 20b) and the server 30 may be networks based on different protocols.

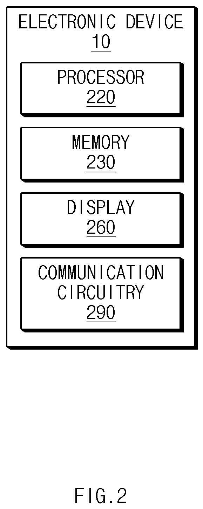

FIG. 2 is a block diagram illustrating a configuration of an electronic device, according to an embodiment of the disclosure.

Referring to FIGS. 1 and 2, the electronic device 10 may include at least one of at least one processor (e.g., the processor 220), memory 230, a display 260, or communication circuitry 290.

In an embodiment of the disclosure, at least one processor (e.g., the processor 220) may be connected to the memory 230, the display 260, and the communication circuitry 290. For example, the at least one processor may be electrically connected to components of the electronic device 10. For example, the at least one processor may be connected to the components of the electronic device 10 by wire or wirelessly. The at least one processor may be composed of a single chip or a plurality of chips. For example, the at least one processor may include at least one processing circuitry, such as a central processing unit (CPU), an application processor (AP), a micro processor unit (MPU), a communication processor (CP), a system on chip (SoC), or an integrated circuit (IC).

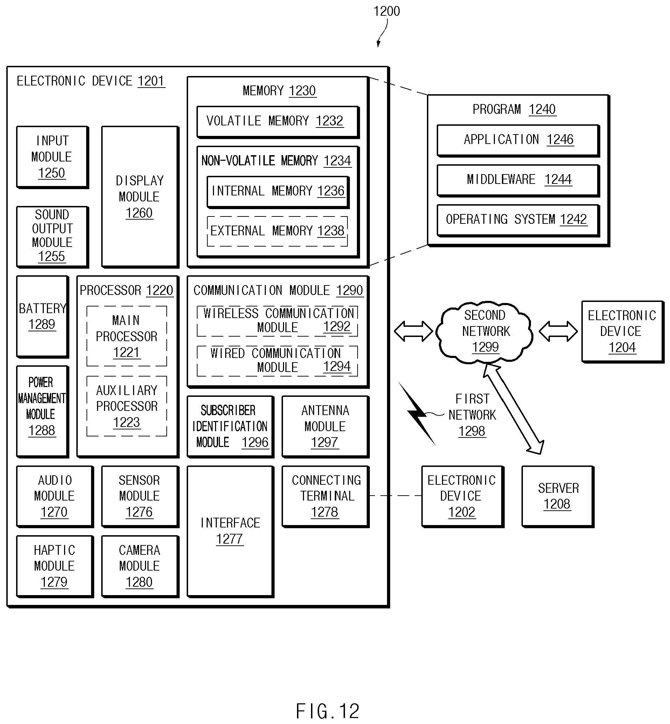

In an embodiment of the disclosure, the at least one processor may perform operations necessary for the operation of the electronic device 10. In an example, the operations of the electronic device 10 may be performed by the at least one processor executing instructions. Some of the operations of the electronic device 10 may be performed by a first processor executing instructions, and at least some of the remaining operations may be performed by a processor different from the first processor executing instructions. The at least one processor may control the components of the electronic device 10. For example, the operations of the electronic device 10 described in the disclosure may be referred to as being performed by the at least one processor. For example, the operations of the electronic device 10 may be performed by the at least one processor executing instructions stored in the memory 230. The at least one processor may be referred to by the processor 1220 of FIG. 12.

In an embodiment of the disclosure, the memory 230 may include an internal memory or an external memory. For example, the internal memory may include at least one of a volatile memory (e.g., dynamic random access memory (DRAM), static random access memory (SRAM), or synchronous DRAM (SDRAM)), or a non-volatile memory (e.g., programmable read-only memory (PROM), one time PROM (OTPROM), erasable PROM (EPROM), electrically erasable and PROM (EEPROM), mask ROM, flash ROM, flash memory, a hard drive, or a solid state drive (SSD)). The external memory may include at least one of a flash drive (e.g., compact flash), secure digital (SD), micro-SD, mini-SD, extreme digital (xD), a multi-media card (MMC), or a memory stick. The memory 230 may be referred to by the memory 1230 of FIG. 12.

In an embodiment of the disclosure, the memory 230 may store instructions executable by at least one processor (e.g., the processor 271). The memory 230 may store at least one data related to the operations of the electronic device 10, or store commands related to functional operations of the components of the electronic device 10. For example, the memory 230 may store at least one application mounted in a preloaded form at the time of manufacture of the electronic device 10, or downloaded in a third-party form from an online market (e.g., an app store). For example, the at least one application may include a voice recognition application supporting operations of a voice recognition service.

In an embodiment of the disclosure, the display 260 may output various screens. For example, the processor 220 may output various screens (e.g., a main interface screen, a home screen, a system setting screen, or an application execution screen) using the display 260. For example, the processor 220 may provide an AI image through the display 260.

In an embodiment of the disclosure, the display 260 may be implemented as a touchscreen display including a display panel, a cover glass, and a touch panel (or a touch sensor). The display panel may receive a driving signal corresponding to image information at a specified frame rate and output a related screen based on the driving signal. The cover glass may be disposed on top of the display panel to transmit light according to the screen output of the display panel. The display 260 may be referred to by the display module 1060 of FIG. 12.

In an embodiment of the disclosure, the communication circuitry 290 may support communication between the electronic device 10 and at least one external device (e.g., the first external electronic device 20a, the second external electronic device 20b) and/or an external server (e.g., the server 30). For example, the communication circuitry 290 may perform transmission and reception of signals or data with the at least one external electronic device by accessing an external network (e.g., the network 199 of FIG. 1). For example, the communication circuitry 290 may establish a network with the at least one external device according to a specified protocol and access the network based on wired communication or wireless communication, thereby performing transmission and reception of signals or data with the at least one external device. The communication circuitry 290 may be referred to by the communication module 1090 of FIG. 12.

The communication circuitry 290 may include at least one circuit for signal processing. For example, the communication circuitry 290 may include at least one converter for frequency modulation of a signal, at least one filter for noise cancellation of a signal, at least one modem for modulation and/or demodulation of a signal, at least one antenna, and/or at least one transceiver. The communication circuitry 290 may be controlled based on, for example, a signal (e.g., a control signal) from the processor 220.

In an embodiment of the disclosure, the electronic device 10 may obtain a plurality of images when at least one instruction stored in the memory 230 is executed by the at least one processor. For example, each of the plurality of images may include metadata. For example, the metadata may include information on a user's interest factor. In an example, the electronic device 10 may receive at least one image from at least one external electronic device (e.g., the first external electronic device 20a, the second external electronic device 20b) and/or the server 30. The electronic device 10 may also identify at least one image stored in the memory 230. For example, the plurality of images may include the at least one received image and/or the at least one identified image.

In an embodiment of the disclosure, the electronic device 10 may generate, when at least one instruction stored in the memory 230 is executed by the at least one processor, at least one prompt for image generation based on the plurality of images and metadata of each of the plurality of images. For example, the prompt may include image information of the plurality of images and/or information (e.g., text information) on interest factors. In an example, the electronic device 10 may generate the prompt including information on an interest factor of each of the plurality of images using an artificial intelligence model. For example, when the interest factor is a specific person, the electronic device 10 may generate a prompt including object information on the specific person. The electronic device 10 may generate a personalized prompt for each of a plurality of users using the plurality of images.

In an embodiment of the disclosure, when the at least one instruction stored in the memory 230 is executed by the at least one processor, the electronic device 10 may obtain at least one AI image based on the at least one prompt. In an example, the electronic device 10 may generate the AI image from the prompt using a generative artificial intelligence model. The electronic device 10 may generate the at least one prompt to generate at least one personalized image of a plurality of users.

In an embodiment of the disclosure, the electronic device 10 may receive, when at least one instruction stored in the memory 230 is executed by the at least one processor, an image by performing short-range communication with at least one external electronic device (e.g., the first external electronic device 20a or the second external electronic device 20b). In an example, the electronic device 10 may request establishment of a channel for short-range communication with the at least one external electronic device. When the channel for short-range communication is established, the electronic device 10 may transmit a user interface (UI) signal for designating an interest factor to the at least one external electronic device. For example, when generating an AI image by receiving an image from an external user, the electronic device 10 may transmit a UI signal for designating an interest factor to obtain the external user's interest factor. In this case, the external user may designate a location of an object or the interest factor to be included in the AI image, a priority, and/or weather of a background.

In an embodiment of the disclosure, the electronic device 10 may identify, when at least one instruction stored in the memory 230 is executed by the at least one processor, an interest factor of an image based on a user input (e.g., a touch input or a voice input) of a user. In an example, the user of the electronic device 10 may designate an interest factor for at least one image. For example, when information (e.g., metadata) on an interest factor is not included in an image received from at least one external electronic device, the user of the electronic device 10 may directly designate the interest factor of the received image. The user may also designate an interest factor for an image stored in the memory 230 to generate an image using AI.

In an embodiment of the disclosure, the electronic device 10 may transmit, when at least one instruction stored in the memory 230 is executed by the at least one processor, a generated AI image to at least one external electronic device based on metadata. In an example, the electronic device 10 may transmit the generated AI image to the external electronic device using identification information of the external electronic device included in the metadata. For example, when the external electronic device 20a transmits an image to the electronic device 10 for AI image generation, the electronic device 10 may transmit the generated AI image to the external electronic device 20a upon generating the AI image. In this case, the electronic device 10 may identify the external electronic device 20a using the identification information of the external electronic device 20a included in the received image. The electronic device 10 may identify the external electronic device 20a and transmit the generated AI image.

In an example, when the electronic device 10 receives images from a plurality of external electronic devices (e.g., the external electronic device 20a and/or the external electronic device 20b), the electronic device 10 may generate a personalized AI image for each external electronic device. The electronic device 10 may transmit the generated AI image to the external electronic device corresponding to the personalized AI image.

In an embodiment of the disclosure, the electronic device 10 may identify, when at least one instruction stored in the memory 230 is executed by the at least one processor, a priority among interest factors of each of a plurality of images based on a user input. In an example, a user of the electronic device 10 may designate the priority among the interest factors of each of the plurality of images. In this case, the electronic device 10 may identify the priority among the interest factors according to the user input and reflect the priority in generating a prompt. For example, the user may designate the priority among persons designated as interest factors in the plurality of images. In this case, the electronic device 10 may generate a prompt for generating an AI image such that a person having a high priority is located at a center of the image. The priority may be designated by each of users of at least one external electronic device. For example, at least one image received by the electronic device 10 from the at least one external electronic device may include information (e.g., metadata) including the priority among the interest factors.

In an embodiment of the disclosure, the electronic device 10 may determine, when at least one instruction stored in the memory 230 is executed by the at least one processor, an interest factor and/or a priority of at least one image. For example, when information on an interest factor and/or information on a priority is not included in information (e.g., metadata) of the at least one image, the electronic device 10 may determine the interest factor and/or the priority of the interest factor from the at least one image using an artificial intelligence model. For example, when a first image including a person and a landmark and a second image including clear weather are obtained, the electronic device 10 may determine the person and the landmark of the first image and the clear weather of the second image as interest factors. In this case, the electronic device 10 may generate an AI image including the person and the landmark of the first image in the clear weather of the second image.

Each of the components of the electronic device 10 described above may include a single entity or a plurality of entities, and some of the plurality of entities may be separately disposed in other components. In an embodiment, one or more of the aforementioned corresponding components or operations may be omitted, or one or more other components or operations may be added.

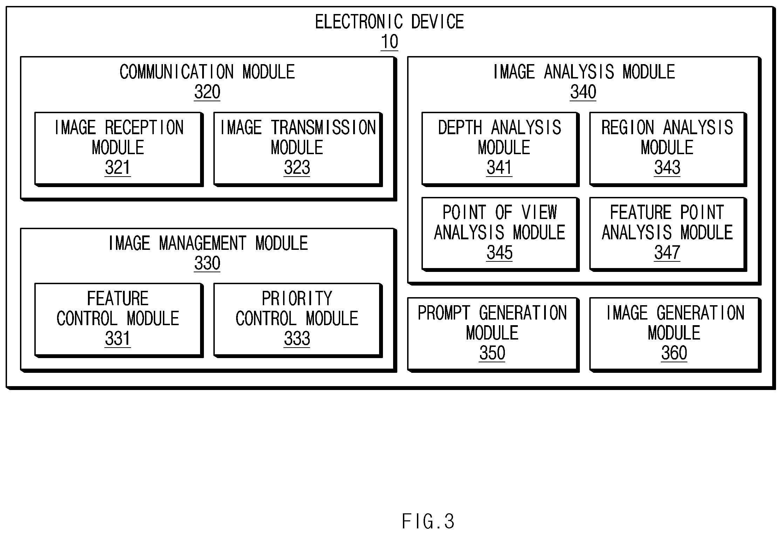

FIG. 3 is a block diagram of modules of an electronic device, according to an embodiment of the disclosure.

Referring to FIG. 3, in an embodiment of the disclosure, the electronic device 10 may include at least one of a communication module 320, an image management module 330, an image analysis module 340, a prompt generation module 350, or an image generation module 360.

In an embodiment of the disclosure, the communication module 320 may include an image reception module 321 and/or an image transmission module 323. In an example, the image reception module 321 may receive an image from at least one external electronic device (e.g., the external electronic device 20a or the second external electronic device 20b of FIG. 1). For example, the image reception module 321 may receive an image including information (e.g., metadata) from the at least one external electronic device. For example, the metadata may include at least one of information (e.g., identification information) on the at least one external electronic device that has transmitted the image, information on an interest factor considered when generating an AI image, or information on a priority. For example, the image reception module 321 may store identification information of each device to transmit the generated AI image to the at least one external electronic device. The image transmission module 323 may transmit the generated AI image to the at least one external electronic device using the stored identification information of each device.

In an embodiment of the disclosure, the image management module 330 may include a feature control module 331 and/or a priority control module 333. In an example, the feature control module 331 may extract interest factors, which are utilized in generating an AI image from at least one image. For example, the interest factor may be set by each user of an external electronic device (e.g., the first external electronic device 20a or the second external electronic device 20b) that transmits an image, or may be directly set by a user of the electronic device (e.g., the electronic device 10) that generates the AI image.

The feature control module 331 may identify an interest factor from an image using an artificial intelligence model. For example, the interest factor may include a person, a building, scenery, and/or nature. The image management module 330 may analyze features and elements within each image. For example, the image management module 330 may identify information on an object, a region, outline information, a background, time, weather, lighting, and/or a location of the image.

In an example, the priority control module 333 may control priorities of interest factors when generating an AI image. For example, when generating the AI image, the priority control module 333 may cause the AI image to be generated according to priorities respectively designated by a plurality of external users. For example, when generating the AI image by receiving a plurality of images from a plurality of external electronic devices, the priority control module 333 may identify information on a priority included in metadata of each of the plurality of images. For example, to generate the AI image, when each of the plurality of external users transmits an image to the electronic device 10, priorities may be set differently for an object (e.g., a person or a building), a background, and/or a composition (e.g., a point of view) included in each image. The priority control module 333 may generate a plurality of AI images using the identified information on each priority. In an example, when no priority is designated, the priority control module 333 may determine a priority from the plurality of images using an artificial intelligence model. For example, when no priority is designated, the priority control module 333 may determine the priority from person object and other object information, background information, composition information, time information, and weather information of a first image, and person object and other object information, background information, and/or resolution information of a second image, using the artificial intelligence model.

In an embodiment of the disclosure, the image analysis module 340 may include a depth analysis module 341, a region analysis module 343, a point of view analysis module 345, and/or a feature point analysis module 347. In an example, the depth analysis module 341 may calculate a depth of an image to obtain information on the depth. The electronic device 10 may generate an AI image using a depth value calculated by the depth analysis module 341. For example, the depth analysis module 341 may obtain a depth value for an interest factor of each image. The region analysis module 343 may identify each region of the image to obtain information on the region. For example, the region analysis module 343 may obtain region information on each object and/or a background of the image through outline recognition (e.g., object segmentation) of the object. For example, the electronic device 10 may identify a region where feature points match through a plurality of photos using the region information. The point of view analysis module 345 may identify information on a point of view of the image. For example, the electronic device 10 may determine a point of view of the generated AI image using the point of view information of the image identified by the point of view analysis module 345. The feature point analysis module 347 may analyze feature points of the image to obtain information on the feature points. For example, the feature point analysis module 347 may obtain information on the feature points of the interest factor extracted by the feature control module 331. The electronic device 10 may generate the AI image using the information on the feature points.

In an embodiment of the disclosure, the prompt generation module 350 may generate a prompt for AI image generation. In an example, the prompt generation module 350 may generate the prompt by taking, as inputs, information on the interest factor extracted by the feature control module 331, information on the priority identified by the priority control module 333, and/or information on the depth, region, point of view, and feature point of each image analyzed by the image analysis module 340. The generated prompt may include image information and/or text information. For example, the image information may include information of each image utilized when generating the AI image. For example, the image information may include information representing an image received from an external electronic device and/or an image stored in the electronic device. For example, the text information may include information on the interest factor and/or information on the priority. For example, the text information may include information on the point of view.

In an embodiment of the disclosure, the image generation module 360 may generate an AI image using the generated prompt. For example, the image generation module 360 may generate the AI image by inputting the generated prompt into a generative artificial intelligence model. The image generation module 360 may generate a partial image or an image using the prompt. The image generation module 360 may also generate an image using the generated partial image and the image utilized when generating the prompt.

Each of the components of the modules of the electronic device 10 described above may include a single entity or a plurality of entities, and some of the plurality of entities may be separately disposed in other components. In an embodiment, at least one or more of the aforementioned corresponding modules or operations may be omitted, or at least one or more other modules or operations may be added.

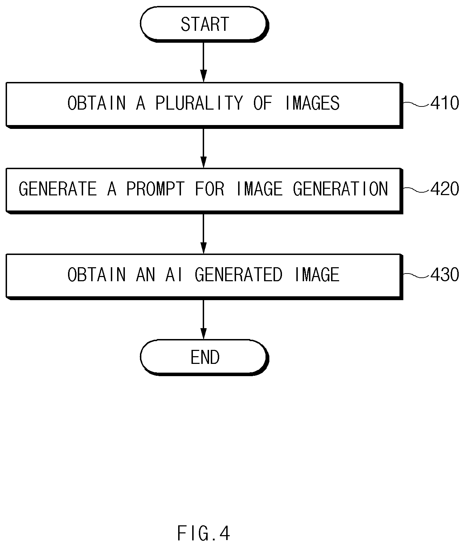

FIG. 4 is a schematic flowchart of operations of an electronic device acquiring an AI-generated image, according to an embodiment of the disclosure.

Referring to FIG. 4, in operation 410, an electronic device (e.g., the electronic device 10 of FIG. 1) according to an embodiment of the disclosure may obtain a plurality of images. In an example, the electronic device 10 may obtain at least one image from at least one external electronic device (e.g., the first external electronic device 20a or the second external electronic device 20b of FIG. 1). The electronic device 10 may also obtain an image from a separate external server (e.g., the server 30 of FIG. 1). The electronic device 10 may generate an AI image using an image stored in a memory (e.g., the memory 230 of FIG. 2).

In operation 420, the electronic device 10 according to an embodiment of the disclosure may generate a prompt for AI image generation. In an example, the electronic device 10 may generate the prompt based on a plurality of obtained images. For example, the electronic device 10 may generate at least one prompt using information (e.g., metadata) included in the plurality of obtained images.

In operation 430, the electronic device 10 according to an embodiment of the disclosure may generate an AI image. In an example, the electronic device 10 may generate the AI image through a generative artificial intelligence model by using the generated prompt as an input. For example, the electronic device 10 may generate the AI image using a diffusion model and/or generative adversarial networks (GAN).

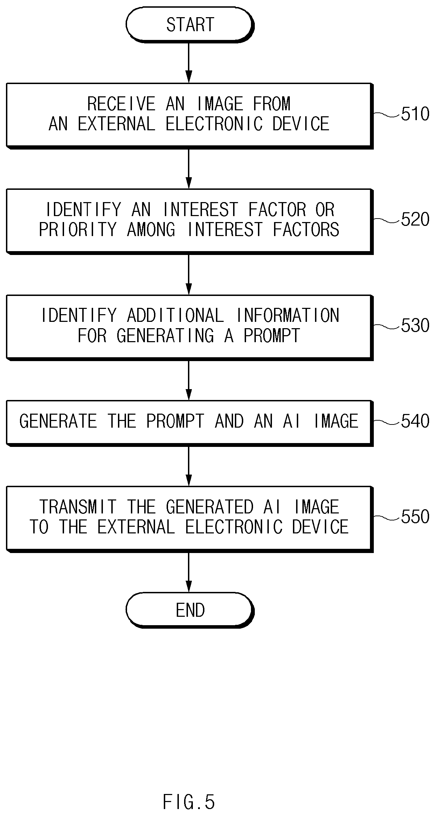

FIG. 5 is a flowchart of operations of an electronic device generating an AI image and transmitting the same to an external electronic device, according to an embodiment of the disclosure.

Referring to FIGS. 3 and 5, in operation 510, an electronic device (e.g., the electronic device 10 of FIG. 1) according to an embodiment of the disclosure may receive an image from at least one external electronic device (e.g., the first external electronic device 20a or the second external electronic device 20b of FIG. 1). In an example, the electronic device 10 may receive the image directly from the at least one external electronic device or from an external server (e.g., the server 30 of FIG. 1).

In an embodiment of the disclosure, the electronic device 10 may receive an image including metadata. For example, the metadata may include at least one of information on a date, a time, a location on which a photo was captured, or shooting conditions (e.g., a shooting device, a shooting resolution, a shooting location, a shooting composition, or a point of view). For example, the metadata may include information on a user's interest factor and/or a priority of the interest factor. For example, the interest factor may include a certain area and/or an element (e.g., an object such as a person or a building, weather, nature, scenery, and/or a background) on the image designated by the user.

In operation 520, the electronic device 10 according to an embodiment of the disclosure may identify an interest factor or a priority among interest factors from at least one received image. In an example, the electronic device 10 may identify information on the interest factor or the priority of each image from the obtained image using the image management module 330 and/or the image analysis module 340. When no priority is designated, the electronic device 10 may determine the priority from elements of the at least one image using the priority control module 333. For example, the elements of the image may include a point of view (e.g., composition), a background, time, weather, a lighting, a location, and/or an object (e.g., a person or a building) of the image.

In operation 530, the electronic device 10 according to an embodiment of the disclosure may identify additional information for generating a prompt. In an example, the electronic device 10 may identify information on at least one of feature point matching, depth, a region, or a point of view (e.g., composition) from at least one obtained image. For example, the electronic device 10 may identify point of view information of each image and apply the identified point of view to a generated AI image. For example, the electronic device 10 may apply depth information of each image to an arrangement of a person or a building within the AI image.

In operation 540, the electronic device 10 according to an embodiment of the disclosure may generate a prompt and an AI image. In an example, the electronic device 10 may generate the prompt for AI image generation. The electronic device 10 may generate at least one prompt for image generation based on a plurality of images and information (e.g., metadata) of each of the images. For example, the prompt may include image information of the plurality of images and/or information (e.g., text information) on an interest factor. For example, the prompt may include information on a composition (e.g., a point of view), depth, lighting, and/or resolution of an AI image to be generated. For example, the prompt may include the image information of the plurality of images.

In an example, the electronic device 10 may generate a prompt including information on an interest factor of each of a plurality of images using an artificial intelligence model. For example, when the interest factor is a specific person, the electronic device 10 may generate the prompt including object information on the specific person. The electronic device 10 may generate a personalized prompt for each of at least one external electronic device. For example, the electronic device 10 may generate at least one personalized prompt using information on the interest factor and/or a priority included in each metadata, based on each image received from the at least one external electronic device.

In an example, the electronic device 10 may generate the prompt in consideration of a capability (e.g., resolution) of an external electronic device, which is to receive the AI image. For example, when the external electronic device receiving the AI image is an electronic device capable of displaying up to Full High Definition (FHD), the electronic device 10 may generate a prompt for generating an AI image having an FHD resolution. For example, upon receiving an image containing information on a first external user's interest factor and/or priority from the first external electronic device 20a capable of displaying in FHD, the electronic device 10 may generate a first prompt for generating an AI image in which the first external user's interest factor and/or priority is reflected and which has the FHD resolution.

In an example, the electronic device 10 may generate a prompt for AI image generation using a first image (e.g., corresponding to an image received from the first external electronic device 20a), a second image (e.g., corresponding to an image received from the second external electronic device 20b), and a third image (e.g., an image stored in the electronic device 10). For example, the first image, the second image, and the third image may correspond to images captured at the same location but differing in at least one of a person, a composition, a point of view, a captured time, or a background.

For example, a first external user may designate a person object and a building object of a first image, a person object of a second image, and a person object and a background area of a third image as interest factors. Further, the first external user may designate, as information on a priority, "1) a group shot where the person object of the second image and the person object of the third image are positioned side-by-side centered around the person object of the first image, 2) a direction (e.g., a composition) in which the person object of the second image and the person object of the third image also look in a direction that the person object of the first image is looking, 3) facing sunlight in clear weather along with the background of the third image, 4) the building of the first image being located behind the person objects, and 5) a composition in which a side of a tower is visible." In this case, a first prompt for generating a first AI image of the first external user may include text information regarding 1) to 5) above and image information of the first image, the second image, and the third image. Further, the first prompt may further include text information for setting a resolution of the first AI image to FHD.

In an example, the electronic device 10 may generate an AI image using a generative artificial intelligence model. For example, the electronic device 10 may generate the AI image using a diffusion model and/or generative adversarial networks (GAN). The electronic device 10 may generate at least one AI image using the generative artificial intelligence model from at least one generated prompt. In an example, the electronic device 10 may generate a plurality of AI images after generating a plurality of prompts from a plurality of images. For example, the electronic device 10 may generate a personalized AI image using a personalized prompt for each of a plurality of users.

In operation 550, the electronic device 10 according to an embodiment of the disclosure may transmit at least one generated AI image to at least one external electronic device. In an example, upon generating the AI image, the electronic device 10 may transmit the generated AI image to the external electronic device that has transmitted the image. For example, in case of receiving an image containing information on a first external user's interest factor and/or priority from the first external electronic device 20a, the electronic device 10 may generate a first AI image in which the first external user's interest factor and/or priority is reflected and transmit the same to the first external electronic device 20a. In this case, the electronic device 10 may use terminal information (e.g., identification information) of the first external electronic device 20a included in metadata of the image transmitted by the first external electronic device 20a.

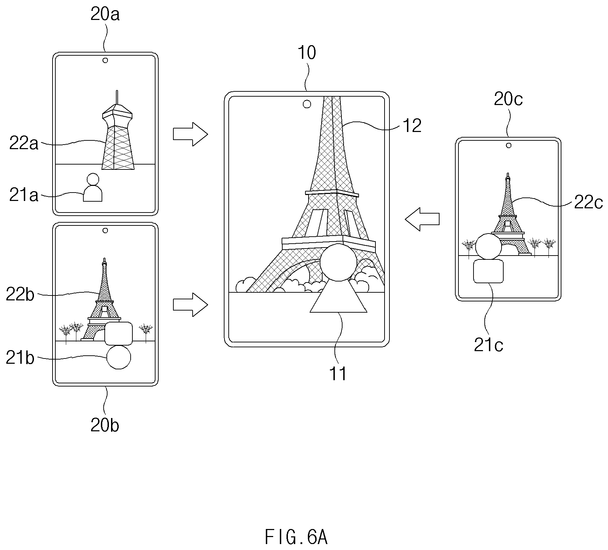

FIG. 6A is an exemplary view illustrating an electronic device receiving an image from an external electronic device, according to an embodiment of the disclosure.

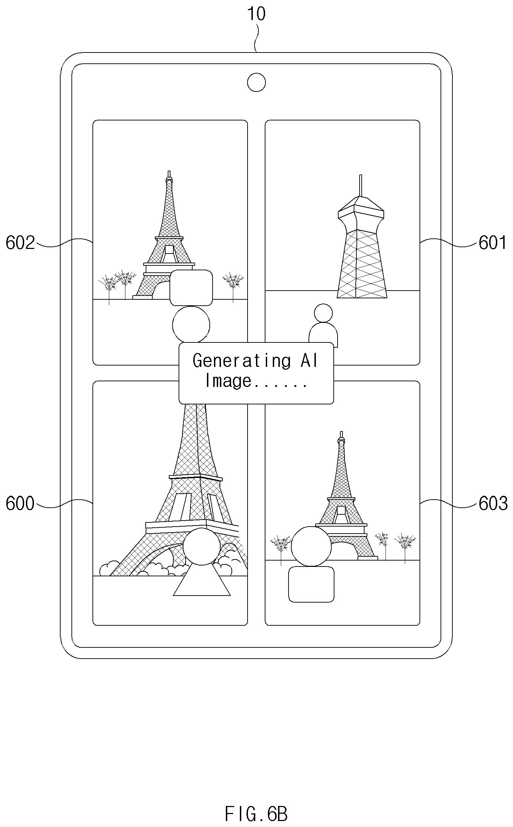

Referring to FIG. 6A, in an embodiment of the disclosure, the electronic device 10 may receive images from a first external electronic device 20a, a second external electronic device 20b, and a third external electronic device 20c. A first image of the first external electronic device 20a (e.g., a first image 601 to be described later in FIG. 6B) may include a first person object 21a and a first building object 22a. A second image of the second external electronic device 20b (e.g., a second image 602 to be described later in FIG. 6B) may include a second person object 21b and a second building object 22b. A third image of the third external electronic device 20c (e.g., a third image 603 to be described later in FIG. 6B) may include a third person object 21c and a third building object 22c. A fourth image stored in the electronic device 10 (e.g., a fourth image 600 to be described later in FIG. 6B) may include a fourth person object 11 and a fourth building object 12. The electronic device 10 may receive the first image, the second image, and the third image from the first external electronic device 20a, the second external electronic device 20b, and the third external electronic device 20c, respectively. The first building object 22a, the second building object 22b, the third building object 22c, and the fourth building object 12 may correspond to the same building. For example, the first image, the second image, the third image, and the fourth image may correspond to photos captured at different points of view, times, and/or locations for the same building, respectively.

In an example, each of the first image, the second image, and the third image may include information (e.g., metadata). For example, the metadata may include a phone number of a user of each external electronic device, an email address of a user of each external electronic device, and/or identification information of each external electronic device (the first external electronic device 20a, the second external electronic device 20b, and the third external electronic device 20c). Further, the metadata may include information on an interest factor and a priority. An individual interest factor of each image (the first image, the second image, and the third image) may be designated in each external electronic device (the first external electronic device 20a, the second external electronic device 20b, and the third external electronic device 20c) by detecting an outline or by directly setting a region. Further, the priority may be designated in each external electronic device (the first external electronic device 20a, the second external electronic device 20b, and the third external electronic device 20c). Further, the interest factor or the priority of each image may be set and designated by the electronic device 10 that generates the AI image.

FIG. 6B is an exemplary view of a user interface (UI) for a process in which an electronic device generates an AI image using a received image, according to an embodiment of the disclosure.

Referring to FIGS. 6A and 6B, the electronic device 10 may obtain a first image 601, a second image 602, a third image 603, and a fourth image 600, and then generate a prompt for image generation. For example, the first image 601 correspond to an image including a first person object 21a and a first building object 22a, the second image 602 correspond to an image including a second person object 21b and a second building object 22b, the third image 603 correspond to an image including a third person object 21c and a third building object 22c, and the fourth image 600 may correspond to an image including a fourth person object 11 and a fourth building object 12, respectively.

In an example, the electronic device 10 may generate the prompt by reflecting information on an interest factor and a priority of each of the first image 601, the second image 602, the third image 603, and the fourth image 600. During a process of generating an AI image, the electronic device 10 may display the first image 601, the second image 602, the third image 603, the fourth image 600, and text information 610 stating "Generating AI Image." The electronic device 10 may generate a plurality of AI images using the first image 601, the second image 602, the third image 603, and the fourth image 600. For example, each of the plurality of AI images may be a personalized AI image generated by setting the interest factor and priority information included in each metadata for each of the received images.

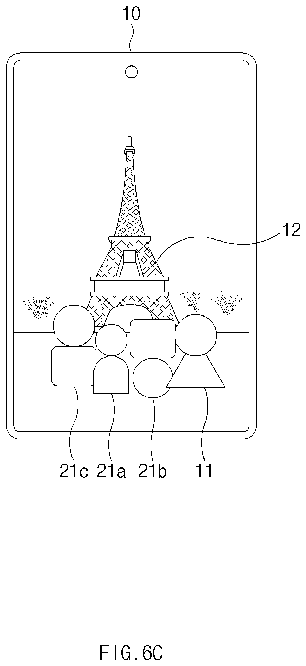

FIG. 6C is an exemplary view of a generated AI image, according to an embodiment of the disclosure.

Referring to FIGS. 6A to 6C, the electronic device 10 may generate an AI image based on the first image 601, the second image 602, the third image 603, and the fourth image 600. For example, a prompt for generating the AI image illustrated in FIG. 6C may include image information on interest factors including the first person object 21a of the first image 601, the second person object 21b and the second building object 22b of the second image 602, the third person object 21c of the third image 603, and the fourth person object 11 of the fourth image 600. Further, for example, the prompt for generating the AI image illustrated in FIG. 6C may include text information for positioning the first to fourth person objects side-by-side as a group photo in the same composition as the composition of the second image 602.

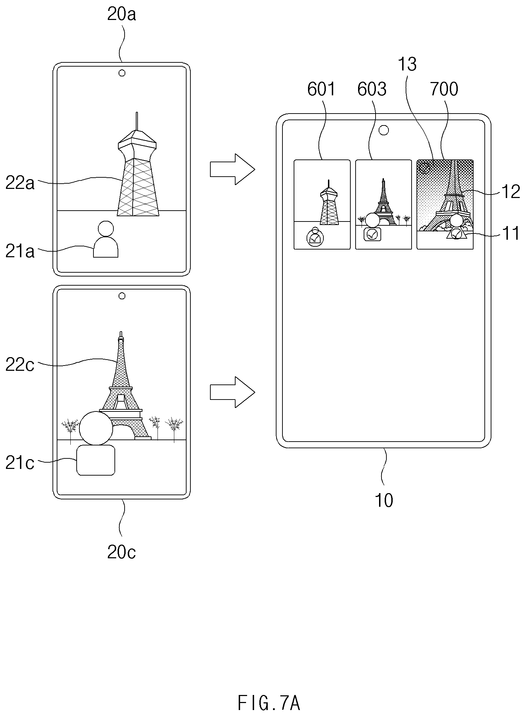

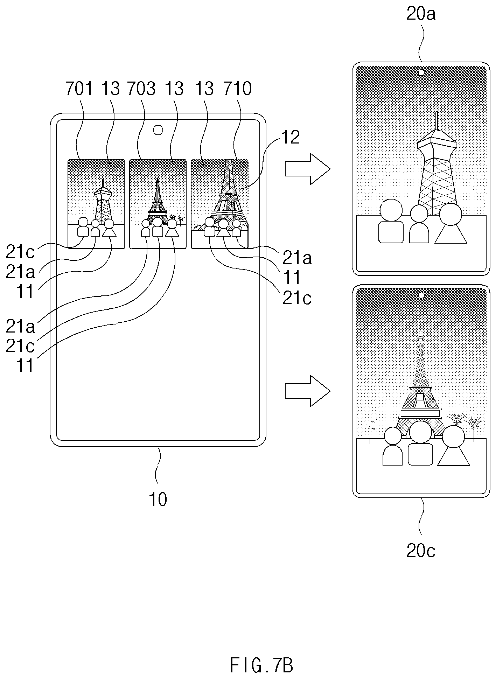

FIGS. 7A and 7B are exemplary views illustrating an electronic device generating a plurality of AI images, according to an embodiment of the disclosure.

Referring to FIGS. 6A, 6B, and 7A, in an embodiment of the disclosure, the electronic device 10 may receive a first image 601 and a third image 603 from a first external electronic device 20a and a third external electronic device 20c, respectively. A fifth image 700 may be stored in the electronic device 10. For example, the fifth image 700 may be an image in which a weather element 13 is added to the fourth image. For example, the fifth image may include a fourth person object 11, a fourth building object 12, and the weather element 13.

In an example, each user may transmit information on an interest factor and/or a priority by including the same in metadata. Further, each external user themselves may include text information regarding their image in the metadata. For example, the text information regarding the image may include text information corresponding to a person object, a building object, a weather element, a composition, and/or a background included in each image.

In an example, each external user may include text information regarding another external user's image in the metadata. For example, a first external user of the first external electronic device 20a may designate a first person object 21a and a first building object 22a as interest factors. Further, the first external user may include, in metadata of a first image 601, text information for including person objects of each image (e.g., the first person object 21a, a third person object 21c, and a fourth person object 11) side-by-side as a group photo in a composition of the first image 601 and including a weather element 13 of a fifth image.

Likewise, a third external user of the third external electronic device 20c may designate the third person object 21c and the third building object 22c as interest factors. Further, the third external user may include, in metadata of the third image 603, text information for including person objects of each image (e.g., the first person object 21a, the third person object 21c, and the fourth person object 11) side-by-side as a group photo in a composition of the third image 603 and including the weather element 13 of the fifth image.

In an embodiment of the disclosure, the electronic device 10 may generate a plurality of prompts based on a received image. In an example, after receiving a first image 601 and a third image 603, the electronic device 10 may analyze each image and information (e.g., metadata) included in each image to generate a prompt meeting a request of each user. For example, a first prompt meeting a request of a first external user may include image information of each image (the first image 601, the third image 603, and a fifth image 700), information on an interest factor designated by the first external user, and information on a priority designated by the first external user. The information on the interest factor of the first external user may include information on a first person object 21a and the building object 22a. The information on the priority of the first external user may include text information for including each of person objects (e.g., the first person object 21a, the third person object 21c, and the fourth person object 11) and the weather element 13 in a composition of the first image 601. For example, a third prompt meeting a request of a third external user may include the image information of each image (the first image 601, the third image 603, and the fifth image 700), information on an interest factor designated by the third external user, and the information on the priority designated by the third external user. The information on the interest factor of the third external user may include information on the third person object 21c and the building object 22c. The information on the priority of the third external user may include text information for including each of the person objects (e.g., the first person object 21a, the third person object 21c, and the fourth person object 11) and the weather element 13 in a composition of the third image 603.

Referring to FIGS. 6A to 7B, in an embodiment of the disclosure, the electronic device 10 may generate a plurality of AI images (e.g., a first AI image 701 and a second AI image 703). For example, the electronic device 10 may generate the AI image by taking a generated prompt (e.g., a first prompt or a third prompt) as an input of a generative artificial intelligence model. In an example, the electronic device 10 may generate the first AI image 701 using the first prompt considering an interest factor and a priority of a first external user. For example, the first AI image 701 may include a first person object 21a, a third person object 21c, a fourth person object 11, a first building object 22a, and a weather element 13 in a composition of a first image 601. The electronic device 10 may generate the third AI image 703 using the third prompt considering an interest factor and a priority of a third external user. For example, the third AI image 703 may include the first person object 21a, the third person object 21c, the fourth person object 11, a third building object 22c, and the weather element 13 in a composition of a third image 603.

In an embodiment of the disclosure, the electronic device 10 may transmit a plurality of generated AI images to external users, respectively. For example, the electronic device 10 may transmit the first AI image 701, generated in consideration of an interest factor and a priority of the first external user, to the first external electronic device 20a of the first external user. For example, the electronic device 10 may transmit the third AI image 703, generated in consideration of an interest factor and a priority of the third external user, to the third external electronic device 20c of the third external user.

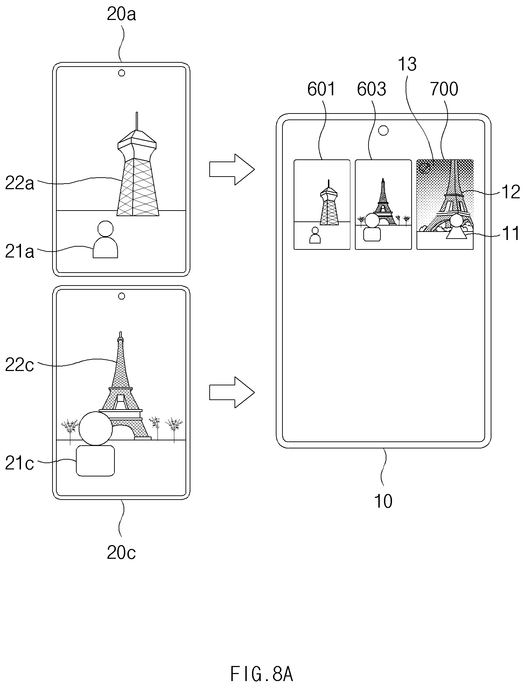

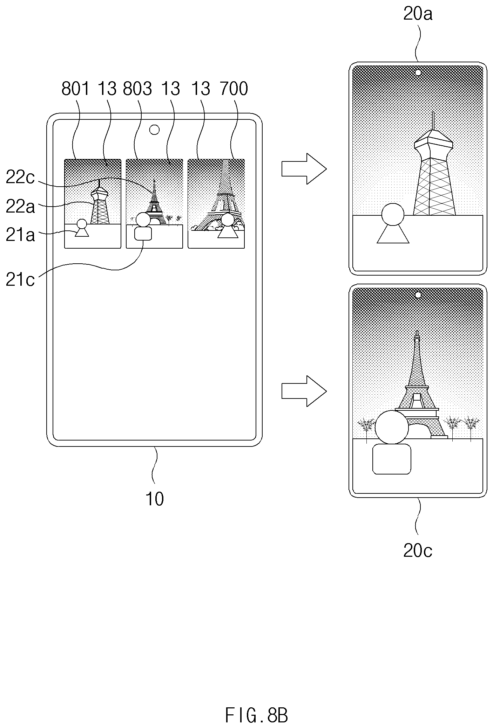

FIGS. 8A and 8B are exemplary views illustrating an electronic device generating a plurality of AI images, according to an embodiment of the disclosure.

Referring to FIGS. 6A, 6B, and 8A, in an embodiment of the disclosure, the electronic device 10 may receive a first image 601 and a third image 603 from the first external electronic device 20a and the third external electronic device 20c, respectively. A fifth image 700 may be stored in the electronic device 10. For example, the fifth image 700 may be an image in which a weather element 13 is added to the fourth image. For example, the fifth image 700 may include a fourth person object 11, a fourth building object 12, and the weather element 13. In an example, each user may transmit an image without designating an interest factor and/or a priority. For example, a first external user may transmit the first image 601 without including information on the interest factor and/or the priority in metadata. In this case, the electronic device 10, which is a terminal generating an AI image, may designate the interest factor and/or the priority for each external user. For example, the electronic device 10 may identify the information on the interest factor and/or the priority from a plurality of images (e.g., the first image 601, the third image 603, and the fifth image 700) through a user input.

For example, the electronic device 10 may identify a first person object 21a and a first building object 22a from the first image 601 as interest factors. Further, the electronic device 10 may include information on the priority of the first external user in a first prompt. For example, the electronic device 10 may include text information for including only the weather element 13 of the fifth image in a composition of the first image 601. Similarly, the electronic device 10 may identify a third person object 21c and a third building object 22c from the third image 603 as interest factors. Further, the electronic device 10 may include information on the priority of a third external user in a third prompt. For example, the electronic device 10 may include text information for including only the weather element 13 of the fifth image in a composition of the third image 603.

In an embodiment of the disclosure, the electronic device 10 may generate a plurality of prompts (e.g., the first prompt and the third prompt) based on a received image and the user input. In an example, after receiving the first image 601 and the third image 603, the electronic device 10 may analyze the interest factor and the priority according to the user input to generate the plurality of prompts. For example, the first prompt meeting a request of the first external user may include image information of the first image 601 and the fifth image 700, information on the interest factor designated for the first external user, and the information on the priority. The information on the interest factor designated for the first external user may include information on the first person object 21a and a building object 22a. The information on the priority designated for the first external user may include text information for including the weather element 13 in the composition of the first image 601. For example, the third prompt meeting a request of the third external user may include image information of the third image 603 and the fifth image 700, information on the interest factor designated for the third external user, and the information on the priority. The information on the interest factor designated for the third external user may include information on the third person object 21c and a building object 22c. The information on the priority designated for the first external user may include text information for including the weather element 13 in the composition of the third image 603.

Referring to FIGS. 6A, 6B, 8A, and 8B, in an embodiment of the disclosure, the electronic device 10 may generate a plurality of AI images (e.g., a first AI image 801 and a second AI image 803). For example, the electronic device 10 may generate AI images by taking a generated prompt (e.g., a first prompt or a third prompt) as an input of a generative artificial intelligence model. In an example, the electronic device 10 may generate the first AI image 801 using the first prompt considering an interest factor and a priority designated for a first external user. For example, the first AI image 801 may include a first person object 21a, a first building object 22a, and a weather element 13 in a composition of a first image 601. The electronic device 10 may generate the third AI image 803 using the third prompt considering an interest factor and a priority designated for a third external user. For example, the third AI image 803 may include a first person object 21c, a third building object 22c, and the weather element 13 in a composition of a third image 603.

In an embodiment of the disclosure, the electronic device 10 may transmit a plurality of generated AI images to external users, respectively. For example, the electronic device 10 may transmit the first AI image 801 to the first external electronic device 20a of the first external user. For example, the electronic device 10 may transmit the third AI image 803 to the third external electronic device 20c of the third external user.

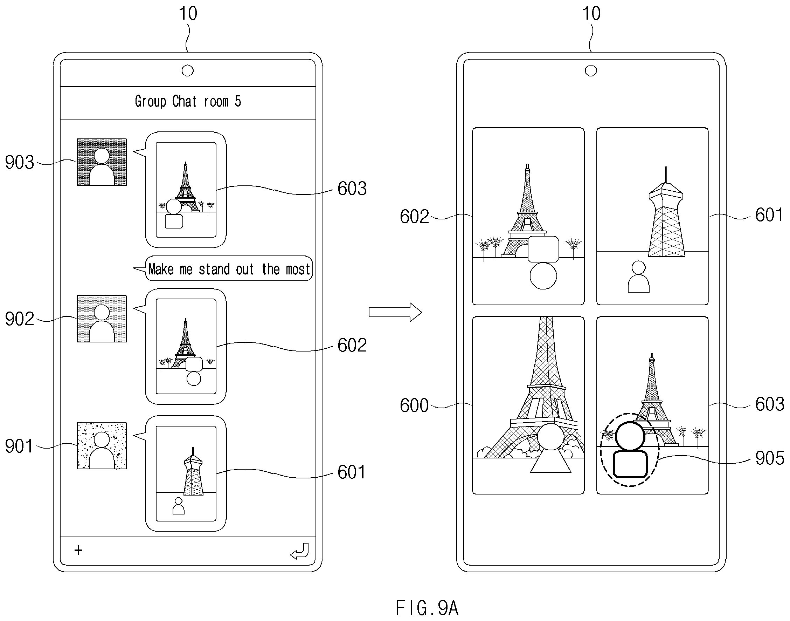

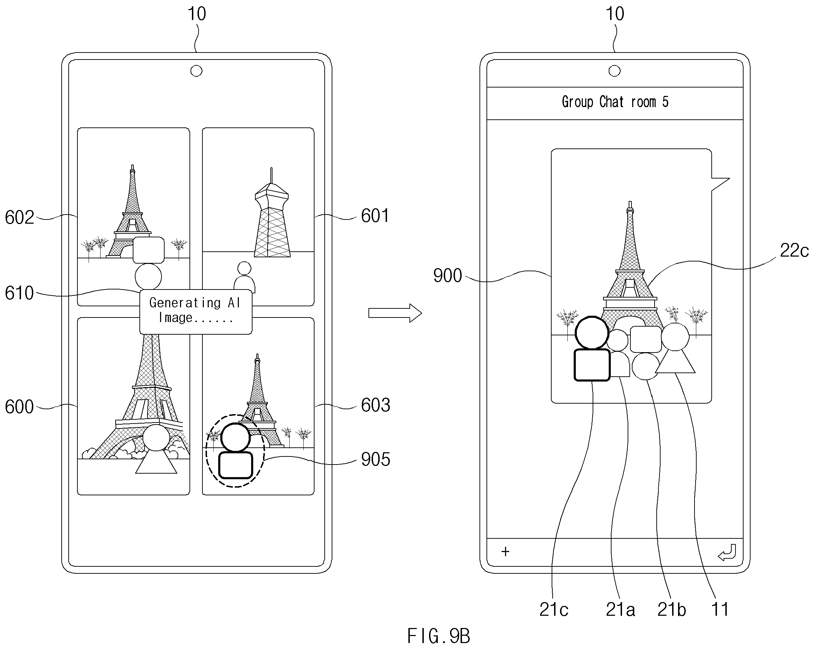

FIGS. 9A and 9B are exemplary views illustrating an electronic device generating an AI image, according to an embodiment of the disclosure.

Referring to FIGS. 6A, 6B, and 9A, in an embodiment of the disclosure, the electronic device 10 may obtain a plurality of images (e.g., a first image 601, a second image 602, and a third image 603) from a plurality of external users (e.g., a first external user 901, a second external user 902, and a third external user 903) through a group chat room of a messenger or an application. Each of the plurality of external users may also transmit a request through the group chat room along with or after the transmission of the image. For example, the request may include text information associated with designation of an interest factor. For example, referring to FIG. 9A, the third external user 903 may transmit the third image 603 and the text information associated with the designation of the interest factor (e.g., "Make me stand out the most") through the group chat room.

In an embodiment of the disclosure, the electronic device 10 may download a plurality of images transmitted by a plurality of external users through the group chat room. A user of the electronic device 10 may directly designate an interest factor corresponding to requests of the plurality of external users. In an example, the user of the electronic device 10 may designate a third person object 21c included in a third image 603 in response to the request of a third external user 903, "Make me stand out the most." For example, referring to FIGS. 9A and 9B, the electronic device 10 may indicate the designated interest factor using a first affordance 905. The electronic device 10 may generate an AI image using a first image 601, a second image 602, and the third image 603 received from the plurality of external users, and a fourth image 600 stored in the electronic device 10.

In an embodiment of the disclosure, the electronic device 10 may generate a prompt for AI image generation using an interest factor designated by a user and a plurality of images (e.g., a first image 601, a second image 602, a third image 603, and a fourth image 600). For example, the prompt for generating the AI image illustrated in FIG. 9B may include image information corresponding to a third person object 21c and a third building object 22c of the third image 603, a first person object 21a of the first image 601, a second person object 21b of the second image 602, and a fourth person object 11 of the fourth image 600. Further, for example, the prompt for generating the AI image illustrated in FIG. 9B may include text information for positioning the first to fourth person objects side-by-side as a group photo in the same composition as a composition of the third image 603, including the third building object 22c in a background, and positioning the third person object 21c at the very front or center. In an embodiment of the disclosure, the electronic device 10 may generate at least one candidate AI image using the generated prompt. During a process of generating the at least one candidate AI image, the electronic device 10 may output text information 610 stating "Generating AI Image." In an example, the user of the electronic device 10 may select one AI image from among the at least one candidate AI image. For example, the user of the electronic device 10 may select an AI image 900. In response to a user selection, the electronic device 10 may generate and store the AI image 900. The electronic device 10 may deliver the generated AI image 900 to a plurality of external users through a group chat room.

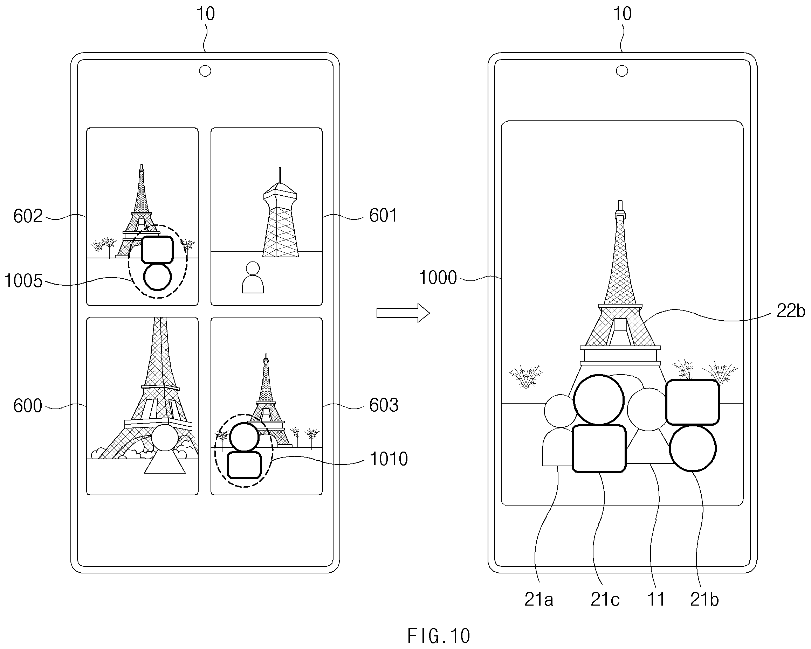

FIG. 10 is an exemplary view illustrating an electronic device generating an AI image, according to an embodiment of the disclosure.

Referring to FIGS. 6A, 6B, 9A, 9B, and 10, the electronic device 10 may designate a plurality of person objects as interest factors. In an example, the electronic device 10 may directly designate a plurality of person objects among person objects (e.g., a first person object 21a, a second person object 21b, a third person object 21c, and a fourth person object 11) included in a plurality of images (e.g., a first image 601, a second image 602, a third image 603, and a fourth image 600) as interest factors based on the plurality of images. For example, a user of the electronic device 10 may directly designate the second person object 21b and the third person object 21c as interest factors. For example, as illustrated in FIG. 10, the electronic device 10 may indicate the designated interest factors using a first affordance 1005 and a second affordance 1010.

In an embodiment of the disclosure, the electronic device 10 may generate a prompt using the designated interest factors and the plurality of images. For example, the prompt for generating the AI image illustrated in FIG. 10 may include image information corresponding to a second person object 21b, a second building object 22b, the first person object 21a, the third person object 21c, and the fourth person object 11. Further, for example, the prompt for generating the AI image illustrated in FIG. 10 may include text information for positioning the first to fourth person objects side-by-side as a group shot in the same composition as a composition of the second image 602, including the second building object 22b in a background, and positioning the second person object 21b and the third person object 21c in front of or at the center relative to other person objects (e.g., the first person object 21a and the fourth person object 11). The electronic device 10 may generate an AI image 1000 from the generated prompt using an image generative artificial intelligence model. The generated AI image 1000 may be included such that the second person object 21b and the third person object 21c are positioned in front of other person objects (e.g., the first person object 21a and the fourth person object 11) to be relatively larger.

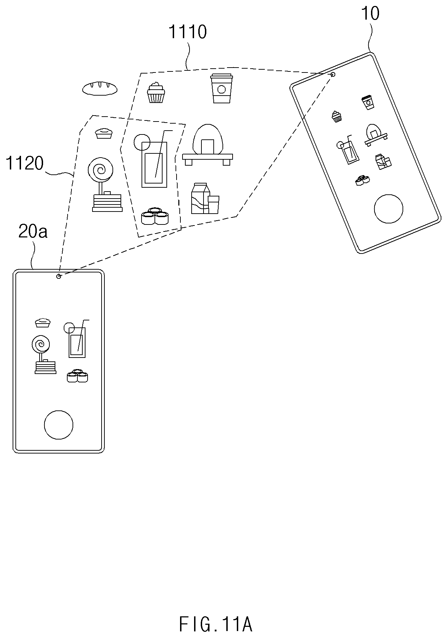

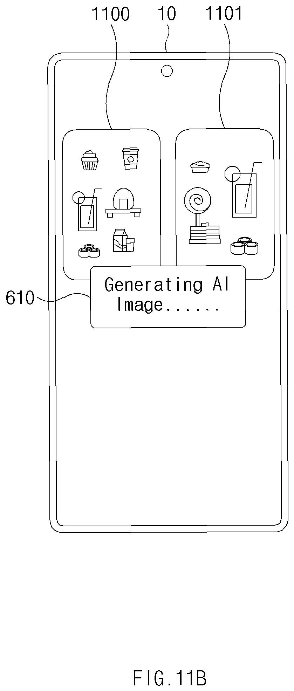

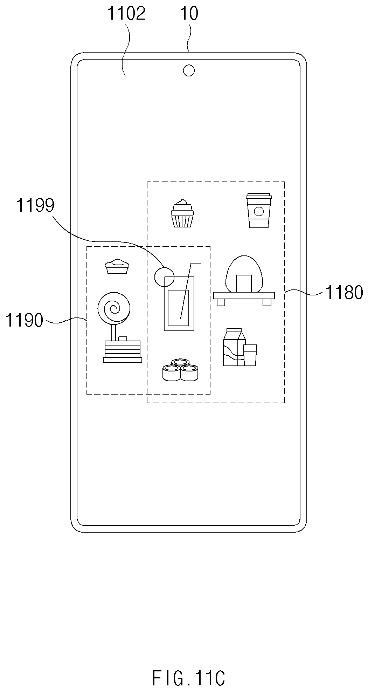

FIGS. 11A, 11B, and 11C are exemplary views illustrating AI image generation when a priority is not specified, according to an embodiment of the disclosure.

FIG. 11A illustrates a case in which a plurality of objects are not all captured within a camera composition of a single terminal (e.g., the electronic device 10 or a first external electronic device 20a). Referring to FIG. 11A, in an embodiment of the disclosure, the electronic device 10 and the second external electronic device 20a may capture a plurality of objects from different directions. In an example, the electronic device 10 may capture a plurality of objects present in a first range 1110. The second external electronic device 20a may capture a plurality of objects present in a second range 1120. A first image 1100 of FIG. 11B may correspond to an image in which the electronic device 10 captures the plurality of objects in the first range 1110. A second image 1101 of FIG. 11B may correspond to an image in which the second external electronic device 20a captures the plurality of objects in the second range 1120. The second external electronic device 20a may transmit the second image 1101, in which the plurality of objects in the second range 1120 are captured, to the electronic device 10. The second external electronic device 20a may transmit the second image 1101 without designating an interest factor and/or a priority.

FIG. 11B illustrates a user interface (UI) showing a process in which the electronic device 10 receives the second image 1101 from the first external electronic device 20a to generate an AI image. Referring to FIGS. 11A and 11B, in an embodiment of the disclosure, the electronic device 10 may generate the AI image using a plurality of images. The electronic device 10 may generate a prompt for generating the AI image. During a process of generating the AI image, the electronic device 10 may output the first image 1100, the second image 1101, and text information 610 stating "Generating AI Image."

In an embodiment of the disclosure, when information on an interest factor and/or a priority is not included in a plurality of images, the electronic device 10 may determine the interest factor and/or the priority using an artificial intelligence model. The electronic device 10 may designate priorities of a plurality of objects included in the first image 1100 and the second image 1101 to be the same or different. For example, priorities among identified elements may be determined by an AI analysis model by identifying elements of an image such as object information, regions, compositions, resolutions, etc., shown in each image. The electronic device 10 may generate a prompt based on the determined priorities of each of the objects. For example, the electronic device 10 may generate the prompt by assigning the highest priority to an object included in both the first image 1100 and the second image 1101. For example, an object having the highest priority may be positioned at a center of the generated AI image.

FIG. 11C illustrates that the electronic device 10 generates an AI image 1102 using the first image 1100 and the second image 1101. Referring to FIGS. 11A to 11C, the electronic device 10 may generate the AI image 1102 based on a generated prompt. The prompt may include information on the first image 100 and the second image 1101. Further, the electronic device 10 may determine priorities for a plurality of objects using an artificial intelligence model. The prompt may include information on the determined priorities. For example, the prompt may include text information for positioning a plurality of objects centered around a beverage object 1199. The generated AI image 1102 may correspond to an image captured by a single terminal of a plurality of objects within a range that is difficult to fully capture with a single terminal (e.g., the electronic device 10 or the first external electronic device 20a). The generated AI image 1102 may include a first partial image 1180 including a plurality of objects of the first range 1110 and a second partial image 1190 including a plurality of objects of the second range 1120. The electronic device 10 may transmit the generated AI image 1102 to the first external electronic device 20a.

FIG. 12 is a block diagram illustrating an electronic device in a network environment according to various embodiments.

FIG. 12 is a block diagram illustrating an electronic device 1201 in a network environment 1200 according to various embodiments. Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to one embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

An electronic device according to an embodiment of the disclosure may comprise memory and at least one processor electrically connected to the memory, and the memory may store instructions.

The instructions according to an embodiment of the disclosure, when executed by the at least one processor, cause the electronic device to acquire a plurality of images, each of the plurality of images including metadata including information corresponding to an interest factor.

Each of the plurality of images according to an embodiment may include metadata including information corresponding to an interest factor.

The instructions according to an embodiment of the disclosure, when executed by the at least one processor, cause the electronic device to generate at least one prompt for generating images using an artificial intelligence model, based on the plurality of images and interest factors of the plurality of images.

The instructions according to an embodiment of the disclosure, when executed by the at least one processor, cause the electronic device to generate, based on the generated at least one prompt, at least one image using the artificial intelligence model.

The at least one prompt according to an embodiment of the disclosure may include image information corresponding to the plurality of images and text information corresponding to the interest factors of the plurality of images.

The instructions according to an embodiment of the disclosure, when executed by the at least one processor, cause the electronic device to receive at least one external image from at least one external electronic device.

The instructions according to an embodiment of the disclosure, when executed by the at least one processor, cause the electronic device to identify, based on a user input from a user of the electronic device, an interest factor associated with a user image stored in the memory.

The plurality of images according to an embodiment of the disclosure may include at least one external image and the user image.

The instructions according to an embodiment of the disclosure, when executed by the at least one processor, cause the electronic device to request an establishment of a channel for short-range communication to the at least one external electronic device through the communication circuitry.

The instructions according to an embodiment of the disclosure, when executed by the at least one processor, cause the electronic device to transmit, based on establishment of the channel, a signal causing the at least one external electronic device to display a user interface for designating an interest factor to the at least one external electronic device.

According to an embodiment of the disclosure, metadata of the at least one image may include identification information of the at least one external electronic device that transmitted the at least one image.

The instructions according to an embodiment of the disclosure, when executed by the at least one processor, cause the electronic device to transmit, using the identification information, the generated at least one image to at least one external electronic device.

The instructions according to an embodiment of the disclosure, when executed by the at least one processor, cause the electronic device to acquire a user input associated with the interest factors of the plurality of images from a user of the electronic device, and identify, based on the acquired user input, the interest factors of the plurality of images.

The instructions according to an embodiment of the disclosure, when executed by the at least one processor, cause the electronic device to identify, based on the user input, priorities among the interest factors of the plurality of images.

The instructions according to an embodiment of the disclosure, when executed by the at least one processor, cause the electronic device to generate the at least one prompt further including information corresponding to the identified priorities.

The instructions according to an embodiment of the disclosure, when executed by the at least one processor, cause the electronic device to acquire at least one external image including metadata without information on an interest factor, and identify, using artificial intelligence model, an interest factor of the at least one external image.

A method of the electronic device according to an embodiment of the disclosure may comprise acquiring a plurality of images, and each of the plurality of images including metadata including information corresponding to an interest factor.

The method of the electronic device according to an embodiment of the disclosure may comprise generating at least one prompt for generating images using an artificial intelligence model, based on the plurality of images and the interest factors of the plurality of images.

The method of the electronic device according to an embodiment of the disclosure may comprise generating, based on the generated at least one prompt, at least one image using the artificial intelligence model.

In the method of the electronic device according to an embodiment of the disclosure, the at least one prompt may include image information corresponding to the plurality of images and text information corresponding to the interest factors of the plurality of images.

The method of the electronic device according to an embodiment of the disclosure may comprise receiving at least one external image from at least one external electronic device.

The method of the electronic device according to an embodiment of the disclosure may comprise identifying, based on a user input from a user of the electronic device, an interest factor associated with a user image stored in the electronic device.

In the method of the electronic device according to an embodiment of the disclosure, the plurality of images may include at least one external image and the user image.

The method of the electronic device according to an embodiment of the disclosure may comprise requesting an establishment of a channel for short-range communication to the at least one external electronic device.

The method of the electronic device according to an embodiment of the disclosure may comprise transmitting, based on establishment of the channel, a signal causing the at least one external electronic device to display a user interface for designating an interest factor to the at least one external electronic device.

In the method of the electronic device according to an embodiment of the disclosure, metadata of the at least one image may include identification information of the at least one external electronic device that transmitted the at least one image.

The method of the electronic device according to an embodiment of the disclosure may comprise transmitting, using the identification information, the generated at least one image to at least one external electronic device.

The method of the electronic device according to an embodiment of the disclosure may comprise acquiring a user input associated with the interest factors of the plurality of images from a user of the electronic device, and identifying, based on the acquired user input, the interest factors of the plurality of images.

The method of the electronic device according to an embodiment of the disclosure may comprise identifying, based on the user input, priorities among the interest factors of the plurality of images.

The method of the electronic device according to an embodiment of the disclosure may comprise generating the at least one prompt further including information corresponding to the identified priorities.

The method of the electronic device according to an embodiment of the disclosure may comprise acquiring at least one external image including metadata without information on an interest factor, and identifying, using artificial intelligence model, an interest factor of the at least one external image.

In a computer-readable storage medium comprising instructions according to an embodiment of the disclosure, the instructions, when executed by at least one processor, cause the at least one processor to acquire a plurality of images, each of the plurality of images including metadata including information corresponding to an interest factor.

In the computer-readable storage medium comprising instructions according to an embodiment of the disclosure, the instructions, when executed by at least one processor, cause the at least one processor to identify interest factors of the plurality of images.

In the computer-readable storage medium comprising instructions according to an embodiment of the disclosure, the instructions, when executed by at least one processor, cause the at least one processor to generate at least one prompt for generating images using an artificial intelligence model, based on the plurality of images and interest factors of the plurality of images.

In the computer-readable storage medium comprising instructions according to an embodiment of the disclosure, the instructions, when executed by at least one processor, cause the at least one processor to generate, based on the generated at least one prompt, at least one image using the artificial intelligence model.

In the computer-readable storage medium comprising instructions according to an embodiment of the disclosure, the at least one prompt according to an embodiment of the disclosure may include image information corresponding to the plurality of images and text information corresponding to the interest factors of the plurality of images.

In the computer-readable storage medium comprising instructions according to an embodiment of the disclosure, the instructions, when executed by at least one processor, cause the at least one processor to receive at least one external image from at least one external electronic device

In the computer-readable storage medium comprising instructions according to an embodiment of the disclosure, the instructions, when executed by at least one processor, cause the at least one processor to identify, based on a user input from a user of the electronic device, an interest factor associated with a user image stored in the computer-readable storage medium.

In the computer-readable storage medium comprising instructions according to an embodiment of the disclosure, the instructions, when executed by at least one processor, the plurality of images according to an embodiment of the disclosure may include at least one external image and the user image.

In the computer-readable storage medium comprising instructions according to an embodiment of the disclosure, the instructions, when executed by at least one processor, cause the at least one processor to request an establishment of a channel for short-range communication to the at least one external electronic device through the communication circuitry.

In the computer-readable storage medium comprising instructions according to an embodiment of the disclosure, the instructions, when executed by at least one processor, cause the at least one processor to transmit, based on establishment of the channel, a signal causing the at least one external electronic device to display a user interface for designating an interest factor to the at least one external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
memory; and
at least one processor electrically connected to the memory,
wherein the memory stores instructions,
wherein the instructions, when executed by the at least one processor, cause the electronic device to:
acquire a plurality of images, each of the plurality of images including metadata including information corresponding to an interest factor,
generate at least one prompt for generating images using an artificial intelligence model, based on the plurality of images and interest factors of the plurality of images, and
generate, based on the generated at least one prompt, at least one image using the artificial intelligence model.

2. The electronic device of claim 1,
wherein the at least one prompt includes image information corresponding to the plurality of images and text information corresponding to the interest factors of the plurality of images.

3. The electronic device of claim 2, further comprising communication circuitry,
wherein the instructions, when executed by the at least one processor, cause the electronic device to:
receive at least one external image from at least one external electronic device,
identify, based on a user input from a user of the electronic device, an interest factor associated with a user image stored in the memory, and
wherein the plurality of images includes at least one external image and the user image.

4. The electronic device of claim 3,
wherein the instructions, when executed by the at least one processor, cause the electronic device to:
request an establishment of a channel for short-range communication to the at least one external electronic device through the communication circuitry,
transmit, based on establishment of the channel, a signal causing the at least one external electronic device to display a user interface for designating an interest factor to the at least one external electronic device.

5. The electronic device of claim 3 or 4,
wherein metadata of the at least one image includes identification information of the at least one external electronic device that transmitted the at least one image, and
wherein the instructions, when executed by the at least one processor, cause the electronic device to:
transmit, using the identification information, the generated at least one image to at least one external electronic device.

6. The electronic device of claim 2,
wherein the instructions, when executed by the at least one processor, cause the electronic device to:
acquire a user input associated with the interest factors of the plurality of images from a user of the electronic device,
identify, based on the acquired user input, the interest factors of the plurality of images.

7. The electronic device of claim 6,
wherein the instructions, when executed by the at least one processor, cause the electronic device to:
identify, based on the user input, priorities among the interest factors of the plurality of images,
generate the at least one prompt further including information corresponding to the identified priorities.

8. The electronic device of claim 2,
wherein the instructions, when executed by the at least one processor, cause the electronic device to:
acquire at least one external image, and
identify, using artificial intelligence model, an interest factor of the at least one external image.

9. A method of an electronic device, comprising:
acquiring a plurality of images, each of the plurality of images including metadata including information corresponding to an interest factor;
generating at least one prompt for generating images using an artificial intelligence model, based on the plurality of images and the interest factors of the plurality of images; and
generating, based on the generated at least one prompt, at least one image using the artificial intelligence model.

10. The method of claim 9,
wherein the at least one prompt includes image information corresponding to the plurality of images and text information corresponding to interest factors of the plurality of images.

11. The method of claim 10, further comprising:
receiving at least one external image from at least one external electronic device; and
identifying, based on a user input from a user of the electronic device, an interest factor associated with a user image stored in the electronic device,
wherein the plurality of images includes at least one external image and the user image.

12. The method of claim 11, further comprising:
requesting an establishment of a channel for short-range communication to the at least one external electronic device; and
transmitting, based on establishment of the channel, a signal causing the at least one external electronic device to display a user interface for designating an interest factor to the at least one external electronic device.

13. The method of claim 11 or 12,
wherein metadata of the at least one image includes identification information of the at least one external electronic device that transmitted the at least one image, and
wherein the method further comprises transmitting, using the identification information, the generated at least one image to at least one external electronic device.

14. The method of claim 10, further comprising:
acquiring a user input associated with the interest factors of the plurality of images from a user of the electronic device; and
identifying, based on the acquired user input, the interest factors of the plurality of images.

15. The method of claim 14, further comprising:
identifying, based on the user input, priorities among the interest factors of the plurality of images; and
generating the at least one prompt further including information corresponding to the identified priorities.
